# FASCICULE DE BREVET EUROPEEN

(11) **EP 2 226 169 B1**
(45) Date de publication et mention de la délivrance du brevet: **19.08.2015**
(21) Numéro de dépôt: 09154351.2
(22) Date de dépôt: 04.03.2009
(51) Int. Cl.: B26D 3/08, B29C 44/56, C08J 9/36, C09J 7/02

(54) **Mousse avec une bande de matière adhésive**
Schaumstoff mit einem Klebeband
Foam with a strip of adhesive material

(43) Date de publication de la demande: 08.09.2010
(73) Titulaire: NMC S.A., 4731 Eynatten (BE)
(72) Inventeur: Dujardin, René, 4730 Raeren (BE); Mayeres, Jean-Pierre, 4700 Eupen (BE)
(74) Mandataire: Office Freylinger

(56) Documents cités:
- EP-A- 0 584 276
- EP-A- 1 389 629
- DE-A1- 10 141 005
- US-A- 5 188 792

## Description

### Domaine technique

La présente invention concerne une mousse avec une bande de matière adhésive.

### Etat de la technique

Les mousses polymériques sont bien connues et leur domaine d'application est vaste. Pour la fabrication de telles mousses, des polymères et le cas échéant des additifs sont mélangés et plastifiés sous pression à haute température. Un gaz de moussage sous pression est injecté dans ce mélange qui est ensuite extrudé à travers une filière et refroidi. Lors de son extrusion à l'air libre, le mélange subit une chute de pression qui entraîne la formation de bulles de gaz à l'intérieur du mélange, provoquant ainsi la formation de la mousse. En pratique, la mousse fraîchement formée est tirée et refroidie à l'air libre. Lorsque le gaz de moussage n'est pas de l'air, un échange gazeux se produit spontanément entre l'air extérieur et le gaz contenu dans les cellules, à travers les parois cellulaires de la mousse, phénomène appelé dégazage de la mousse.

Afin de pouvoir fixer la mousse sur un support, une matière adhésive est appliquée en une bande sur une face de la mousse. En général, une colle thermofusible auto-adhésive (hot-melt) est appliquée à l'état fondu en tant que bande de matière adhésive sur une surface de la mousse fraîchement extrudée. La bande de matière adhésive est ensuite recouverte d'un papier de séparation qui sert de protection pendant le transport. L'application de l'adhésif sur la mousse fraîchement extrudée provoque cependant des irrégularités sur la surface de la mousse à l'endroit où la bande de matière adhésive a été appliquée. On constate qu'après le dégazage de la mousse, la surface de la mousse couverte par la bande de matière adhésive est accidentée et présente des aspérités. Outre leur aspect esthétique peu attrayant, ces irrégularités de surface entraînent une adhérence non-uniforme de la mousse à un substrat.

En effet, lorsque le processus d'échange gazeux n'est pas équilibré, c'est-à-dire quand les perméabilités du gaz de moussage et de l'air à travers les parois cellulaires de polymère sont différentes, il se produit un changement de la pression interne des cellules de la mousse. Si la mousse est suffisamment flexible, il se peut qu'elle se déforme à cause de la différence de pression générée, se traduisant soit par un gonflement (surpression dans les cellules), soit par un effondrement (dépression dans les cellules) suivant respectivement que la perméabilité de l'air est plus grande ou moins grande que celle du gaz de moussage.

Par conséquent, pour les applications pour lesquelles une adhérence uniforme de la mousse à un substrat est souhaitée, une mousse ayant une surface lisse, sans irrégularités est nécessaire. Afin d'obtenir une telle mousse, qui, à l'état dégazé, comporte une surface adhésive lisse et sans aspérités, on est donc obligé d'appliquer la bande de matière adhésive sur une surface de la mousse une fois le dégazage achevé.

Pour ce faire, il est nécessaire de stocker la mousse après l'extrusion jusqu'à ce qu'elle soit pratiquement dégazée. Ensuite seulement, la bande de matière adhésive peut y être appliquée. La manipulation supplémentaire et le stockage intermédiaire de la mousse qui sont nécessaires pour obtenir une surface adhésive sans irrégularités entraînent cependant des coûts de production supérieurs.

Une solution possible à ce problème est présentée dans la demande de brevet EP 1 389 629 qui consiste en la répartition de la colle ou de la bande adhésive en pistes distinctes et espacées, ce qui permet à une surface suffisante de la mousse de ne pas s'effondrer. On obtient ainsi une surface totale de mousse encollée et non encollée nettement plus plane.

Néanmoins, le principe identifié dans EP 1 389 629 impose une limitation de la surface de colle applicable par unité de surface de la mousse sur la partie destinée à être collée sur un substrat. Par conséquent la force de collage développable se trouve en principe aussi limitée. Dans les cas où cette dernière propriété ne serait pas suffisante, il faudrait alors soit augmenter la surface disponible pour le collage au substrat, ce qui ne peut pas toujours être possible pour des questions d'encombrement, voire même poser des problèmes lors de la fabrication d'une mousse trop large, soit augmenter la quantité de colle par piste, ce qui a une influence négative sur les coûts.

L'objet de la présente invention est par conséquent de proposer une mousse avec une bande de matière adhésive appliquée sur une surface de la mousse fraîchement extrudée, dans laquelle la surface couverte ne présente pas d'irrégularités après le dégazage et qui ne présente pas la limitation de la solution proposée dans EP 1 389 629.

Le document US 5,188,792 décrit un procédé permettant de refroidir un bloc de mousse de polyuréthane. A l'issue de la production des blocs de polyuréthane, la surface externe des blocs diminuent rapidement jusqu'à atteindre la température ambiante de la pièce tandis que la température au centre des blocs restera élevée. Pour résoudre ce problème, il est proposé de réaliser des incisions sur des faces opposées du bloc de polyuréthane de façon à ce que de l'air puisse circuler à travers le bloc de mousse et permettre ainsi de refroidir son centre rapidement.

### Objet de l'invention

Conformément à l'invention, cet objectif est atteint par une mousse selon la revendication 1.

### Description générale de l'invention

Afin de résoudre le problème mentionné ci-dessus, la présente invention propose une mousse comprenant au moins une matière adhésive appliquée en une bande sur une surface de la mousse fraîchement extrudée, c'est-à-dire pendant le dégazage et avant le dégazage complet, la mousse comportant sur cette surface des incisions pratiquées avant l'application de la matière adhésive et cette surface en contact avec la matière adhésive étant sans irrégularités après dégazage de la mousse.

La présente invention apporte ainsi un remède pertinent aux limitations de l'état de la technique. En effet, les inventeurs ont découvert qu'en pratiquant des incisions à la surface de la mousse destinée à être encollée, il devient possible d'enduire l'entièreté de la surface disponible, sans que l'on constate un effondrement de la mousse responsable des irrégularités de surface.

Il est ainsi possible d'obtenir une surface en contact avec la bande de matière adhésive qui reste lisse et sans irrégularités depuis le moment de l'application de la bande de matière adhésive sur la surface de la mousse fraîchement extrudée, et tout au long du dégazage complet de la mousse. Par aspect lisse et sans irrégularités, on entend dans le cadre de la présente invention un aspect de surface qui est en fait très similaire à l'aspect de la surface d'une mousse non couverte de matière adhésive.

Les incisions faites conformément à la présente invention sont en fait des entailles faites en surface de la mousse (du côté de l'adhésif) sans pour autant que ces incisions ne traversent l'épaisseur de la mousse. Elles peuvent être continues ou discontinues, longitudinales ou perpendiculaires, voire présenter un angle quelconque de 0 à 90° par rapport au sens de l'extrusion de la mousse, ou même des combinaisons de ces configurations. Les incisions peuvent être normales ou inclinées par rapport à la surface de la mousse.

Dans un mode de réalisation avantageux, les incisions sont parallèles par rapport au sens d'extrusion de la mousse avec ou sans enlèvement de matière. Il est surprenant que même dans le cas où les incisions sont entièrement recouvertes de matière adhésive, on ne constate pas d'irrégularités de surface, même pour des échantillons de très grandes longueurs (p. ex. 250 m, voir exemples ci-dessous).

Les incisions peuvent se faire avec ou sans enlèvement de matière et ont de préférence une largeur entre 0.001 et 5 mm et de manière davantage préférée entre 0.01 et 1 mm. Comme les incisions ne traversent pas la mousse, leur profondeur dépend évidemment de l'épaisseur de la mousse et des conditions auxquelles la mousse va être exposée. D'une manière générale, ces incisions peuvent représenter jusqu'à 80 %, de préférence jusqu'à 50 % et de manière davantage préférée jusqu'à 35 % de l'épaisseur de la mousse. En pratique, la profondeur des incisions sera de préférence comprise entre 0.2 et 15 mm, de manière davantage préférée entre 0.5 et 10 mm et en particulier de 1 à 7 mm.

La distance entre deux incisions contiguës dépend en partie de leur profondeur, mais sera généralement comprise entre 1 et 15 mm, de préférence entre 2 et 5 mm. Avantageusement, une bande comporte entre 3 et 15 incisions longitudinales par 5 cm de largeur.

Ces incisions peuvent être pratiquées avantageusement durant la fabrication de la mousse, après sa sortie de la filière et de préférence après un refroidissement suffisant de la mousse. Une fois les incisions - en nombre et profondeur variables - pratiquées, on peut appliquer la ou les matière(s) adhésive(s), par exemple en enduisant la surface ainsi entaillée avec de la colle thermofusible ou encore en y appliquant une bande adhésivée double face.

D'une manière surprenante pour l'homme de métier, les incisions dans la mousse telles que décrites ci-dessus permettent donc un dégazage très uniforme de la mousse, alors que la bande de matière adhésive qui est appliquée directement sur la surface de la mousse fraîchement extrudée devrait a priori provoquer l'affaissement de la mousse comme décrit ci-dessus. Une déformation de la surface de la mousse couverte par la bande de matière adhésive lors du dégazage est évitée et une mousse sans irrégularités de surface est obtenue après dégazage, même lorsque la matière adhésive recouvre sensiblement toute la surface de la mousse.

La surface régulière résultante permet un meilleur contact et donc une meilleure adhérence entre la matière adhésive et le substrat.

Ceci évite donc aussi de devoir prévoir un stockage intermédiaire de la mousse pendant le dégazage et l'application ultérieure de la bande de matière adhésive, mais permet néanmoins d'appliquer la colle en continu sur toute la surface, respectivement sur des parties étendues de celle-ci. Les coûts de production d'une mousse avec une surface sans irrégularités peuvent donc être diminués grâce à l'invention par rapport au dégazage préalable et la surface d'adhésion peut être augmentée par rapport à la solution proposée par EP 1 389 629.

Néanmoins, il est clair que les incisions superficielles n'excluent pas l'application de la matière adhésive par pistes alternées comme décrit dans ladite demande de brevet EP 1 389 629 dans les cas où la surface d'adhérence n'est pas le facteur limitatif.

La matière adhésive est avantageusement une colle thermofusible auto-adhésive qui est appliquée à l'état fondu sur la mousse ou une bande adhésive double face.

La bande de matière adhésive comprend de préférence un papier de séparation pour protéger la bande de matière adhésive. Avant de coller la mousse sur un substrat, le papier de séparation est enlevé, révélant ainsi la matière adhésive appliquée sur la mousse.

La mousse est de préférence une mousse polymérique choisie parmi le groupe comprenant les polyoléfines, les polyoléfines métallocènes (c'est-à-dire obtenues en présence de catalyseurs métallocènes), les polystyrènes, leurs copolymères et leurs mélanges.

La mousse peut comprendre des additifs usuels comme par exemple les stabilisateurs de cellules, les nucléants, les antifeus, les antiUV, les pigments, les lubrifiants, les anti-oxydants, les réflecteurs et/ou absorbeurs d'infrarouges et leurs mélanges.

L'agent de moussage est un agent de moussage chimique ou physique, de préférence il s'agit d'un gaz de moussage et avantageusement d'un gaz de moussage choisi parmi le groupe comprenant les alcanes, les HFC, le CO₂, le N₂, l'Ar et leurs mélanges.

La présente invention propose également un procédé selon la revendication 11.

Les incisions sont réalisées après l'extrusion, de préférence après un refroidissement suffisant de la mousse, et avant l'application de la matière adhésive par une ou plusieurs lames fixes ou mobiles, de préférence montée(s) sur un support, l'ensemble formant l'outil d'incision. Si les incisions sont faites en parallèle par rapport au déplacement de la mousse fraîchement extrudée, l'outil peut être monté de manière fixe au-dessus de la bande de mousse de telle manière que la ou les lames entaillent la mousse au passage avant que la colle n'y soit appliquée.

Si l'on souhaite prévoir des incisions qui ne sont pas parallèles au déplacement de la mousse (éventuellement en plus d'incisions parallèles au mouvement), l'outil d'incision peut également comprendre une ou plusieurs parties mobiles et/ou rotatives comprenant des lames.

Dans un mode de réalisation avantageux, la matière adhésive est une colle thermofusible auto-adhésive (hot-melt), qui est fondue dans un fondoir et pompée à travers une buse d'injection pour la déposer directement sur la mousse extrudée et incisée.

Selon un mode de réalisation préféré, la matière adhésive est déposée sur un papier de séparation appliqué ensuite sur la surface incisée de la mousse. Le papier de séparation peut être enlevé avant de fixer la mousse sur un substrat.

Le dépôt de la matière adhésive peut se faire soit par un dispositif qui est en contact avec le papier de séparation, soit avec un dispositif qui n'est pas en contact avec le papier de séparation. Dans ce dernier cas, le papier de séparation est guidé quelques millimètres ou centimètres en dessous de la buse et la matière adhésive se dépose sur le papier.

Selon un autre mode de réalisation préféré, la matière adhésive est déposée en continu sur un rouleau de transfert rotatif, de préférence thermostatisé et anti-adhésif, qui est en contact avec la surface incisée de la mousse.

Avantageusement, un gaz, de préférence l'azote, est injecté dans la matière adhésive fondue, avant son application sur la mousse. Ainsi, il est possible d'obtenir une structure moussée de matière adhésive. On obtient ainsi une plus grande surface de contact pour une même quantité de colle, et une épaisseur de la piste plus grande pour un meilleur étalement lors de la pose sur un substrat rugueux.

### Brève description des dessins

Par la suite, quelques modes de réalisation avantageux de l'invention sont décrit à titre d'exemple uniquement en se référant aux figures annexées, dans lesquelles
la Fig.1 : représente une vue en coupe d'une mousse selon l'état de la technique avant le dégazage de la mousse ;
la Fig.2 : représente une vue en coupe d'une mousse selon l'état de la technique pendant le dégazage de la mousse ;
la Fig.3 : représente une vue en coupe d'une mousse selon l'invention avant le dégazage de la mousse ;
la Fig.4 : représente une vue en coupe d'une mousse selon l'invention pendant le dégazage de la mousse ;
la Fig.5 : représente une installation pour appliquer une bande de matière adhésive sur une mousse fraîchement extrudée et incisée ;
la Fig.6 : représente un autre mode de réalisation d'une installation pour appliquer une bande de matière adhésive sur une mousse fraîchement extrudée et incisée ;
la Fig.7 : est une photographie d'un échantillon de mousse ne comportant pas d'incisions d'un côté (A, non conforme à l'invention) et comportant des incisions de l'autre côté (B, conforme à l'invention) ;
la Fig.8 : est une vue de l'échantillon de la fig. 7 du côté A ;
la Fig.9 : est une vue de l'échantillon de la fig. 7 du côté B ;
la Fig.10 : est une photographie de deux échantillons de mousse collés sur un support métallique, l'échantillon de gauche ne comportant pas d'incisions (non conforme à l'invention) et l'échantillon de droite comportant des incisions (conforme à l'invention) ;
la Fig.11 :est une photographie des deux échantillons de mousse de la fig. 10 après arrachage du support métallique ;
la Fig.12 :est une photographie de deux bobines (coupées diamétralement) de rubans de mousse (longueur 250 m), l'une des bobines avec un échantillon de mousse ne comportant pas d'incisions (non conforme à l'invention) et l'autre avec un échantillon de mousse comportant des incisions (conforme à l'invention);
la Fig.13 :est une photographie du ruban de mousse non incisée de la fig. 12, alors que
la Fig.14 :est une photographie du ruban de mousse incisée de la fig. 12 conforme à l'invention.

### Description d'une exécution préférée

Sur les figures, les mêmes références désignent des éléments identiques ou similaires.

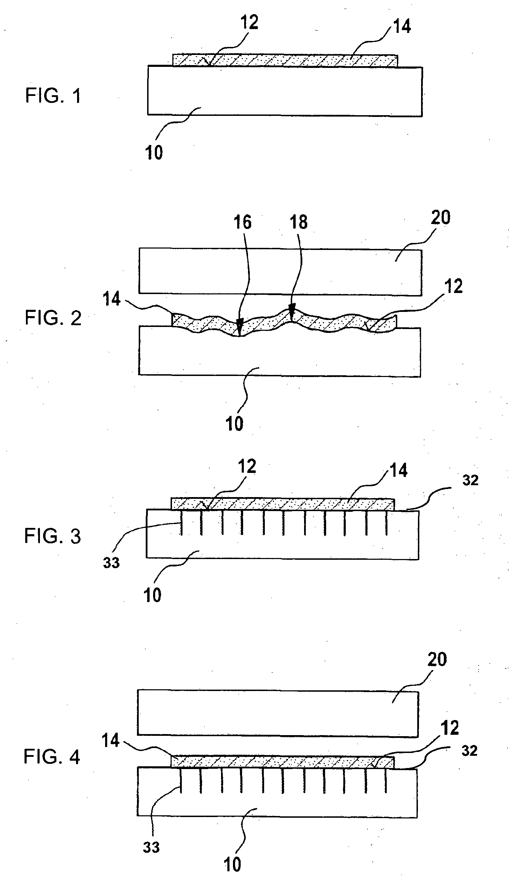

La fig.1 montre une coupe à travers une mousse 10 selon l'état de la technique avec une surface 12 sur laquelle une bande de matière adhésive 14 a été appliquée avant le dégazage. La fig.2 montre la même mousse 10 pendant le dégazage de la mousse 10. La surface 12 de la mousse 10 est affaissée, rugueuse et comprend des creux 16 et des bosses 18. La rugosité dans la surface 12 empêche une bonne adhérence de la surface 12 de la mousse 10 à un substrat 20.

La fig.3 montre une coupe d'une mousse 10 selon l'invention avec une surface 32 comportant des incisions 33 et sur laquelle une bande de matière adhésive 14 a été appliquée. La fig.4 montre la même mousse 10 après le dégazage. La surface 32 de la mousse ne présente pas d'irrégularités. La bonne qualité de la surface 32 permet une bonne adhérence de la mousse 10 à un substrat 20.

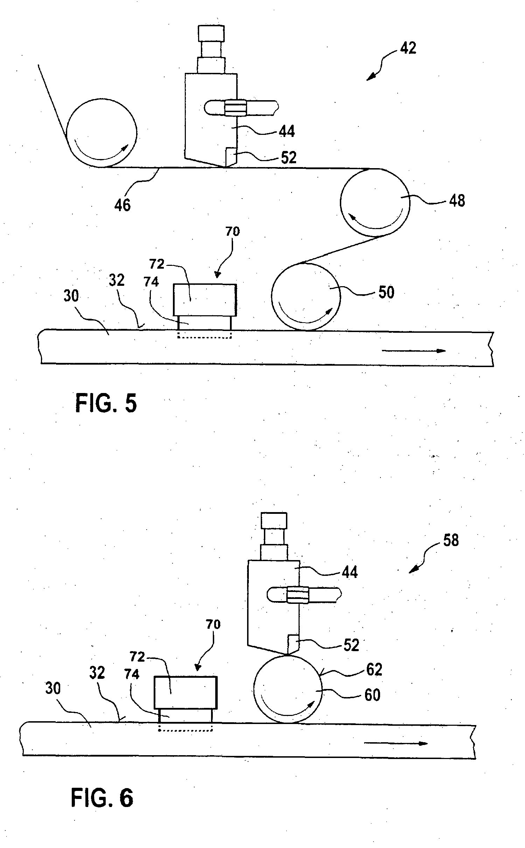

La fig.5 montre une installation 42 pour appliquer une bande de matière adhésive sur une mousse fraîchement extrudée. Celle-ci 30 est pourvue d'incisions par l'outil d'incision 70 comprenant un support 72 et une pluralité de lames 74. L'outil 70 est disposé de telle manière que les lames 74 pratiquent des entailles ou incisions dans la surface 32 de la mousse 30 fraîchement extrudée lorsque celle-ci se déplace (la flèche indiquant le sens du mouvement). Une matière adhésive, de préférence une colle thermofusible auto-adhésive, est fondue dans un fondoir (non représenté) et est amenée à une buse 44. La matière adhésive est déposée par la buse 44 sur un papier de séparation 46 défilant sous la buse 44. Le papier de séparation 46 est guidé par un ou plusieurs rouleaux de guidage 48 et appliqué, avec sa face comprenant la matière adhésive, sur une surface 32 d'une mousse 30 fraîchement extrudée via un rouleau de transfert 50. La buse 44 comprend une tête de buse 52 pour déposer une bande de matière adhésive sur le papier de séparation.

La fig.6 montre un autre mode de réalisation d'une installation 58 pour appliquer une bande de matière adhésive sur une mousse fraîchement extrudée et ensuite pourvue d'incisions 32 par les lames 74 de l'outil d'incision 70. Selon ce mode de réalisation, la bande de matière adhésive est déposée sur un rouleau de transfert 60 thermostatisé et anti-adhésif, qui touche une surface 32 de la mousse 30 fraîchement extrudée et incisée. Ainsi, les pistes à matière adhésive sont déposées par la tête de buse 52 de la buse 44 sur une surface circonférentielle 62 du rouleau de transfert 60 et ensuite transférées sur la surface 32 de la mousse 30 fraîchement extrudée.

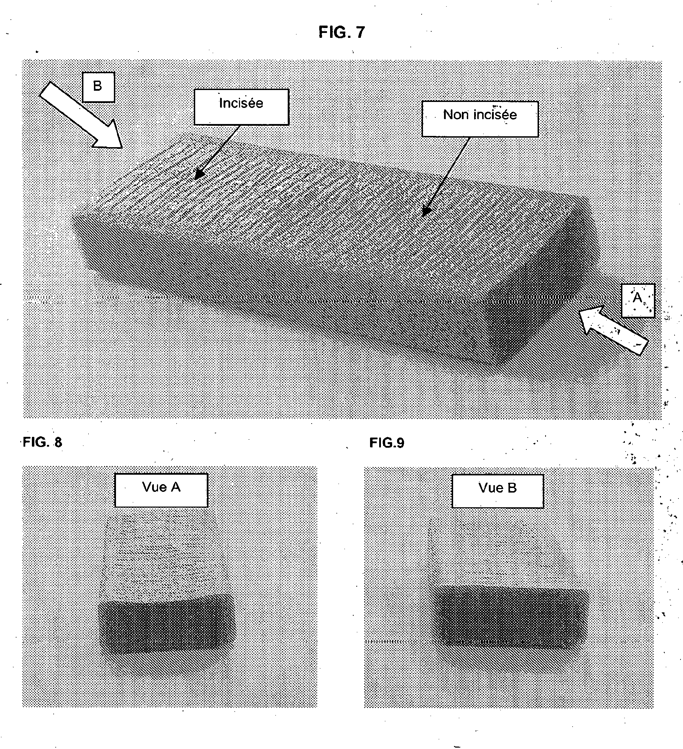

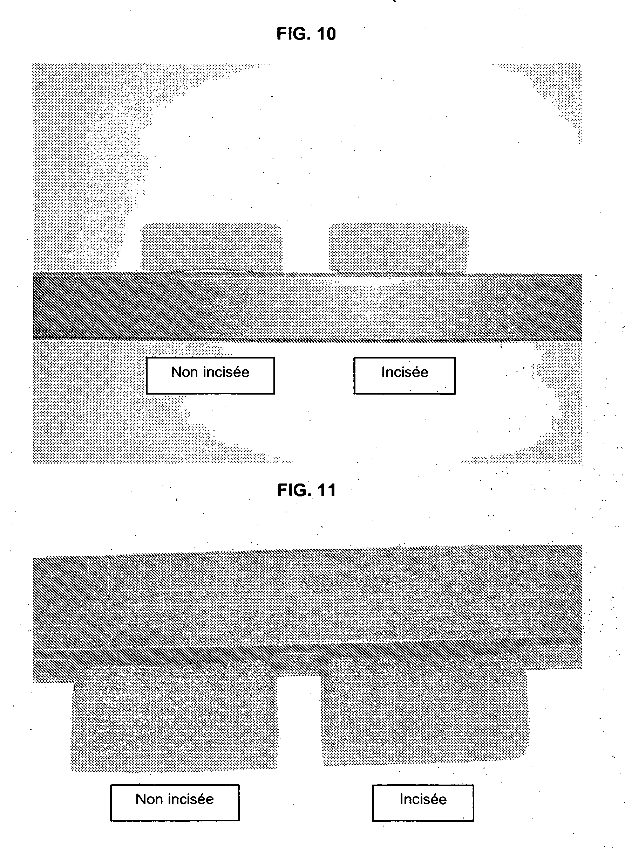

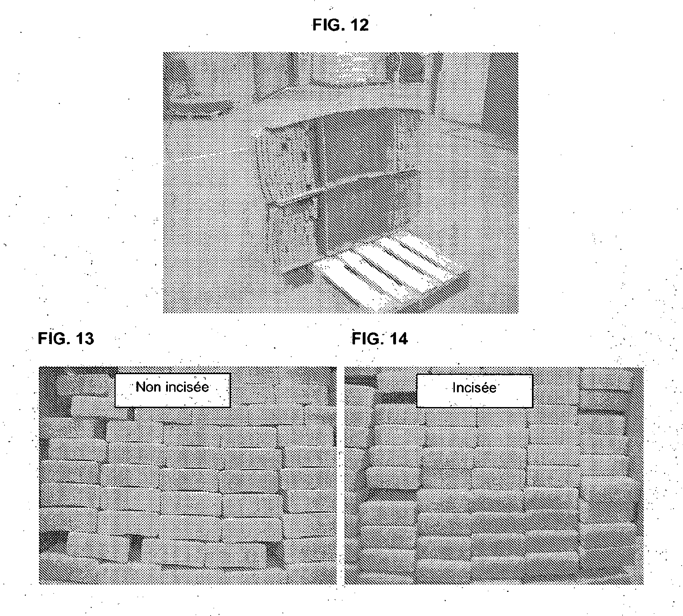

Les fig. 7 à 14 sont des photographies d'échantillons de mousses obtenus soit selon l'invention, c'est-à-dire avec incisions, soit non conformes à l'invention, c'est-à-dire sans incisions. On constate que les échantillons selon l'invention présentent une surface régulière quasi-plane et ce même dans le cas d'échantillons de grandes longueurs (250 m, voir fig. 12 et 14) dont les incisions sont entièrement recouvertes de colle, alors que les échantillons sans incisions, mais encollés de la même manière présentent une surface encollée non plane après dégazage.

Les incisions faites sur les mousses illustrées dans les fig. 7 à 14 ont les caractéristiques suivantes: incisions longitudinales parallèles, profondeur 3 mm ; écartement entre incisions 5.5 mm.

Les mousses illustrées sont faites en polyéthylène basse densité (LDPE), l'agent de moussage utilisé est l'isobutane. La température de moussage se situe entre 108°C et 110°C à la filière. La mousse obtenue a une densité de 24.5 kg/m³.

Les fentes ou incisions sont longitudinales et sont pratiquées avant la dépose de la colle thermofusible (hot-melt). Dans les exemples elles se situent entièrement en dessous du hot-melt.

Le hot-melt utilisé est une colle thermofusible de type "pressure sensitive" (PSA). Le dispositif d'application consiste en un réservoir où la colle est fondue (à ± 160°C), puis pompée via des conduites chauffées (à 190-195°C) vers une buse (à 190°C) qui défini une piste ou bande de colle. La colle est d'abord déposée sur un papier de protection ("release") et le tout est amené en contact avec la mousse extrudée et incisée (l'étape d'incision étant omise pour les modes de réalisation non conformes à l'invention). Il y a typiquement de 10 à 40 cm entre l'endroit où la colle est déposée sur le papier release et la rencontre avec la mousse.

La séquence utilisée pour les exemples est la suivante:
- extrusion de la mousse (extrudeuse alimentée par LDPE + additifs [pigment, stabilisateur de volume, agent de nucléation pour réguler la taille des cellules] + gaz [isobutane]) au travers d'une filière rectangulaire; le débit est de 70 kg/h;
- la mousse est refroidie par passage dans un bac aspergé d'eau, pour réduire au minimum le retrait de la mousse une fois le hot-melt appliqué, si le refroidissement n'est pas suffisant à cet endroit il y a risque de formation ultérieure d'ondulations du papier release,
- l'appareil de découpe des incisions se trouve après le bac de refroidissement (couteaux rotatifs);
- une étireuse garanti la régularité du défilement sous les couteaux d'incision ainsi que la planéité et la régularité de défilement pour la pose du hot-melt;
- la pose du hot-melt via papier release s'enchaîne ensuite à 3 - 5 m de la fin du bac de refroidissement;
- une hache permet de couper en longueurs si désiré;
- un enrouleur permet de constituer des bobines si désiré;
- la piste de colle de l'exemple fait 50 mm de large, 6 grammes de colle par mètre courant de mousse.

Le procédé fonctionne de manière similaire avec des bandes adhésives double face.

## Revendications

1. Mousse (10, 30) comprenant au moins une matière adhésive appliqué en une bande (14) sur une surface (32) de la mousse fraîchement extrudée avant dégazage de la mousse, la surface (32) en contact avec la matière adhésive étant sans irrégularités après dégazage de la mousse, **caractérisée en ce que** la mousse (10, 30) comporte des incisions (33) sur ladite surface (32).

2. Mousse (10, 30) selon la revendication 1, dans laquelle la matière adhésive est une colle thermofusible auto-adhésive ou une bande adhésive double face.

3. Mousse (10, 30) selon l'une des revendications précédentes, dans laquelle les incisions (33) sont continues ou discontinues.

4. Mousse (10, 30) selon l'une des revendications précédentes, dans laquelle les incisions (33) sont parallèles, perpendiculaires, présentent un angle quelconque de 0 à 90° par rapport au sens de l'extrusion de la mousse, ou des combinaisons de ces configurations.

5. Mousse (10, 30) selon l'une des revendications précédentes, dans laquelle la largeur des incisions (33) est comprise entre 0.001 et 5 mm.

6. Mousse (10, 30) selon l'une des revendications précédentes, dans laquelle la distance entre deux incisions (33) contiguës est comprise entre 1 et 15 mm.

7. Mousse (10, 30) selon l'une des revendications précédentes, dans laquelle la profondeur des incisions (33) est comprise entre 0.2 et 15 mm.

8. Mousse (10, 30) selon l'une des revendications précédentes, dans laquelle la mousse comprend entre 3 et 15 incisions (33) par 5 cm de largeur de la mousse.

9. Mousse (10, 30) selon l'une des revendications précédentes, dans laquelle la bande de matière adhésive (14) est recouverte par un papier de séparation.

10. Mousse (10, 30) selon l'une des revendications précédentes, dans laquelle la mousse est une mousse polymérique choisie parmi le groupe comprenant les polyoléfines, les polyoléfines métallocènes, les polystyrènes, leurs copolymères, et leurs mélanges.

11. Procédé de fabrication d'une mousse (10, 30) comportant une surface (32) en contact avec une matière adhésive sans irrégularités après dégazage comprenant les étapes de :
- production d'une mousse par extrusion,
- pratique d'incisions (33) sur une surface dans la mousse fraîchement extrudée,
- application, sur cette surface de la mousse fraîchement extrudée, d'au moins une matière adhésive en au moins une bande(14), et
- dégazage subséquent de la mousse pour obtenir une mousse (10, 30).

12. Procédé selon la revendication 11, dans lequel la matière adhésive est une colle thermofusible auto-adhésive, la matière adhésive étant fondue dans un fondoir et pompée à travers une buse d'injection (44) pour déposer la matière adhésive en au moins une bande (14) sur la mousse fraîchement extrudée.

13. Procédé selon la revendication 11, dans lequel la matière adhésive est déposée en au moins une bande (14) sur un papier de séparation qui est appliqué ensuite sur la surface de la mousse.

14. Procédé selon la revendication 11, dans lequel la matière adhésive est déposée en au moins une bande (14) en continu sur un rouleau de transfert rotatif qui est en contact avec la surface de la mousse.

15. Procédé selon l'une quelconque des revendications 11 à 14, dans lequel un gaz est injecté dans la matière adhésive.

## Patentansprüche

1. Schaumstoff (10, 30), umfassend wenigstens ein anhaftendes Material, das als Band (14) auf einer Oberfläche (32) des frisch extrudierten Schaumstoffs vor dem Entgasen des Schaumstoffs angewendet wird, wobei die Oberfläche (32) mit dem anhaftenden Material nach dem Entgasen des Schaumstoffs ohne Unregelmäßigkeiten in Kontakt ist, **dadurch gekennzeichnet, dass** der Schaumstoff (10, 30) Einschnitte (33) auf der genannten Oberfläche (32) umfasst.

2. Schaumstoff (10, 30) gemäß Anspruch 1, bei dem das anhaftende Material ein selbsthaftender, schmelzklebender Klebstoff oder ein doppelseitiges anhaftendes Band ist.

3. Schaumstoff (10, 30) gemäß einem der voranstehenden Ansprüche, bei dem die Einschnitte (33) ununterbrochen oder unterbrochen sind.

4. Schaumstoff (10, 30) gemäß einem der voranstehenden Ansprüche, bei dem die Einschnitte (33) parallel, lotrecht sind, einen beliebigen Winkel zwischen 0 und 90° im Verhältnis zur Verdrängung des Schaumstoffs aufweisen oder Kombinationen dieser Konfigurationen sind.

5. Schaumstoff (10, 30) gemäß einem der voranstehenden Ansprüche, bei dem die Breite der Einschnitte (33) zwischen 0,001 und 5 mm inbegriffen ist.

6. Schaumstoff (10, 30) gemäß einem der voranstehenden Ansprüche, bei dem der Abstand zwischen zwei aneinanderstoßenden Einschnitten (33) zwischen 1 und 15 mm inbegriffen ist.

7. Schaumstoff (10, 30) gemäß einem der voranstehenden Ansprüche, bei dem die Tiefe der Einschnitte (33) zwischen 0,2 und 15 mm inbegriffen ist.

8. Schaumstoff (10, 30) gemäß einem der voranstehenden Ansprüche, bei dem der Schaumstoff auf 5 cm Breite des Schaumstoffs zwischen 3 und 15 Einschnitten (33) umfasst.

9. Schaumstoff (10, 30) gemäß einem der voranstehenden Ansprüche, bei dem das Band aus anhaftendem Material (14) durch ein Trennpapier abgedeckt ist.

10. Schaumstoff (10, 30) gemäß einem der voranstehenden Ansprüche, bei dem der Schaumstoff ein Polymerschaumstoff ist, der aus der Polyolefine, metallocene Polyolefine, Polystyrole, ihre Kopolymere und ihre Mischungen umfassenden Gruppe ausgewählt ist.

11. Herstellungsverfahren eines Schaumstoffs (10, 30), umfassend eine Oberfläche (32), die mit einem anhaftenden Material ohne Unregelmäßigkeiten nach dem Entgasen in Kontakt ist, umfassend die Stufen:
- Produktion eines Schaumstoffs per Extrusion,
- Praktizieren von Einschnitten (33) auf einer Oberfläche in dem frisch extrudierten Schaumstoff,
- Anwendung wenigstens eines anhaftenden Materials als wenigstens ein Band (14) auf diese Oberfläche des frisch extrudierten Schaumstoffs und
- nachfolgendes Entgasen des Schaumstoffs, um einen Schaumstoff (10, 30) zu erhalten.

12. Verfahren gemäß Anspruch 11, bei dem das anhaftende Material ein selbsthaftender, schmelzklebender Klebstoff ist, wobei das anhaftende Material in einer Schmelzvorrichtung geschmolzen ist und durch eine Einspritzdüse (44) gepumpt wird, um das anhaftende Material wenigstens als ein Band (14) auf dem frisch extrudierten Schaumstoff abzulegen.

13. Verfahren gemäß Anspruch 11, bei dem das anhaftende Material als wenigstens ein Band (14) auf einem Trennpapier abgelegt ist, das anschließend auf der Oberfläche des Schaumstoffs angewendet wird.

14. Verfahren gemäß Anspruch 11, bei dem das anhaftende Material als wenigstens ein Band (14) kontinuierlich auf einer rotierenden Übertragungsrolle aufgebracht wird, die mit der Oberfläche des Schaumstoffs in Kontakt ist.

15. Verfahren gemäß Anspruch 11 bis 14, bei dem in das anhaftende Material ein Gas eingespritzt wird.

## Claims

1. A foam (10, 30) comprising at least one adhesive material applied in a strip (14) onto a surface (32) of the freshly extruded foam prior to degassing of the foam, the surface (32) in contact with the adhesive material being without irregularities after degassing of the foam, **characterised in that** the foam (10, 30) comprises incisions (33) on said surface (32).

2. A foam (10, 30) according to claim 1, in which the adhesive material is a hot-melt, pressure-sensitive adhesive or a double-sided adhesive tape.

3. A foam (10, 30) according to one of the preceding claims, in which the incisions (33) are continuous or discontinuous.

4. A foam (10, 30) according to one of the preceding claims, in which the incisions (33) are parallel, perpendicular, have any angle from 0 to 90° relative to the direction of extrusion of the foam, or combinations of said configurations.

5. A foam (10, 30) according to one of the preceding claims, in which the width of the incisions (33) is between 0.001 and 5 mm.

6. A foam (10, 30) according to one of the preceding claims, in which the distance between two adjacent incisions (33) is between 1 and 15 mm.

7. A foam (10, 30) according to one of the preceding claims, in which the depth of the incisions (33) is between 0.2 and 15 mm.

8. A foam (10, 30) according to one of the preceding claims, in which the foam has between 3 and 15 incisions (33) per 5 cm of width of the foam.

9. A foam (10, 30) according to one of the preceding claims, in which the strip of adhesive material (14) is covered by a release paper.

10. A foam (10, 30) according to one of the preceding claims, in which the foam is a polymeric foam selected from the group comprising polyolefins, metallocene polyolefins, polystyrenes, the copolymers thereof, and mixtures thereof.

11. A method for manufacturing a foam (10, 30) comprising a surface (32) in contact with an adhesive material without irregularities after degassing comprising the steps of:
- producing a foam by extrusion,
- making incisions (33) on a surface in the freshly extruded foam,
- applying onto said surface of the freshly extruded foam at least one adhesive material in at least one strip (14), and
- subsequently degassing the foam to obtain a foam (10, 30).

12. A method according to claim 11, in which the adhesive material is a hot-melt, pressure-sensitive adhesive, the adhesive material being melted in a melting tank and pumped through an injection nozzle (44) to deposit the adhesive material in at least one strip (14) onto the freshly extruded foam.

13. A method according to claim 11, in which the adhesive material is deposited in at least one strip (14) onto a release paper which is then applied onto the surface of the foam.

14. A method according to claim 11, in which the adhesive material is continuously deposited in at least one strip (14) onto a rotary transfer roller which is in contact with the surface of the foam.

15. A method according to any one of claims 11 to 14, in which a gas is injected into the adhesive material.
